# FASCICULE DE BREVET EUROPEEN

(11) **EP 2 342 131 B1**
(45) Date de publication et mention de la délivrance du brevet: **24.04.2013**
(21) Numéro de dépôt: 09756452.0
(22) Date de dépôt: 04.11.2009
(51) Int. Cl.: B64G 1/10, B64G 1/24, B64G 1/36, B64G 1/64

(54) **PROCEDE DE CAPTURE D'UN CONTENEUR D'ECHANTILLONS DE SOL PLANETAIRE SE DEPLAÇANT DANS L'ESPACE**
VERFAHREN ZUM EINFANGEN EINES SICH IM WELTRAUM BEWEGENDEN BEHÄLTERS VON PLANETENBODENPROBEN
METHOD FOR CAPTURING A CONTAINER OF PLANET-GROUND SAMPLES TRAVELLING IN OPEN SPACE

(30) Priorité: 04.11.2008 FR 0806139
(43) Date de publication de la demande: 13.07.2011
(73) Titulaire: THALES, 92200 Neuilly-sur-Seine (FR)
(72) Inventeur: RENAULT, Hervé, F-06400 Cannes (FR); ARBUSTI, Francis, F-06550 La Roquette sur Siagne (FR); SAINCT, Hervé, F-06110 Le Cannet (FR)
(74) Mandataire: Esselin, Sophie
(86) Numéro de dépôt international: PCT/EP2009/064647
(87) Numéro de publication internationale: WO 2010/052254

(56) Documents cités:
- FR-A- 2 686 858
- US-A- 3 201 065
- US-A- 6 089 510
- US-A1- 2003 098 394
- MATTINGLY R ET AL: "Technology Development Plans for the Mars Sample Return Mission" AEROSPACE CONFERENCE, 2005 IEEE, IEEE, PISCATAWAY, NJ, USA, 5 mars 2005 (2005-03-05), pages 1-14, XP010864344 ISBN: 978-0-7803-8870-3

## Description

La présente invention se rapporte à un procédé de capture d'un conteneur d'échantillons de sol planétaire se déplaçant dans l'espace par une sonde se déplaçant également dans l'espace.

Les diverses missions spatiales prévues actuellement, tant celles de la NASA que de l'ESA, envisagent de prélever des échantillons de sols de planètes et de les ramener sur Terre. Certaines de ces missions sont déjà planifiées, comme par exemple le programme européen « Mars Sample Return » (collecte d'échantillons martiens) prévu vers 2010.

De nombreuses études ont été menées sur ce sujet, et les agences spatiales ont établi des scénarios selon lesquels des échantillons prélevés dans le sol de planètes et conditionnés dans un conteneur pour leur transport en direction de la Terre étaient mis en orbite par un lanceur depuis la planète en question, une sonde également mise sur cette orbite depuis la Terre étant chargée de récupérer ce conteneur pour le ramener sur Terre. Une telle séparation de rôles entre un lanceur mettant le conteneur en orbite et une sonde chargée de la capturer et le transporter jusque sur Terre est imposée par l'efficacité du transfert de masses en orbite (selon les lois bien connues de la mécanique orbitale. Il en résulte que l'on ne peut éviter la phase cruciale de capture en orbite des échantillons dans leur conteneur. Or, jusqu'à présent, il n'a été proposé aucun système simple de capture en orbite d'échantillons de sol planétaire.

Tous les systèmes connus reposent sur l'hypothèse que le conteneur d'échantillons est soit très lourd et complexe (il devrait alors comporter des moyens de télécommande, des propulseurs,...), soit du type passif. MATTINGLY R ET AL: "Technology Development Plans for the Mars Sample Return Mission", AEROSPACE CONFERENCE, 2005 IEEE, PISCATAWAY, NJ, USA, 5 mars 2005 (2005-03-05), pages 1-14, XP010864344, ISBN: 978-0-7803-8870-3
est considéré comme étant l'état de la technique le plus proche et montre un procédé de capture d'un conteneur d'échantillons de sol planétaire se déplaçant dans l'espace par une sonde utilisant une cage, la sonde se déplaçant également dans l'espace. Les mécanismes de capture de la sonde sont donc très encombrants, avec des structures dépliables, ce qui impose à la sonde d'effectuer des mouvements complexes. En outre, il est généralement impossible de simuler sur Terre les séquences correspondantes de processus et de les valider, du fait que ces séquences comportent de longs processus de mouvements effectués sous gravité nulle et impliquant des dispositifs de très grandes dimensions. Le cas d'un conteneur lourd et complexe a été généralement éliminé, car aucune mission connue des dix prochaines années ne l'a retenu.

La présente invention a pour objet un procédé de capture d'un conteneur d'échantillons de sol planétaire se déplaçant dans l'espace par une sonde se déplaçant également dans l'espace, ce procédé devant être facile à mettre en oeuvre, avec des moyens les plus simples et les moins onéreux possible.

Le procédé conforme à l'invention est caractérisé en ce que lorsque la sonde est sur l'orbite du conteneur , à une distance de quelques mètres du celui-ci et que la face réceptrice de la sonde est orientée vers le conteneur, on génère à bord de la sonde un premier champ magnétique contrôlé pour réduire les vitesses angulaires du conteneur et l'orienter dans une direction privilégiée pour la capture, et lorsque ces vitesses sont devenues négligeables et qu'il est positionné dans la bonne orientation, tout en approchant la sonde du conteneur, on amorce un processus d'attraction du conteneur par rapport à la sonde à l'aide d'un autre champ magnétique dont les lignes de champ convergent vers la zone de capture de la sonde.

Selon une autre caractéristique de l'invention, on utilise le champ magnétique coté conteneur, servant au contrôle et à l'attraction, pour permettre à la sonde de détecter son attitude à l'aide d'un magnétomètre

La présente invention sera mieux comprise à la lecture de la description détaillée d'un mode de réalisation, pris à titre d'exemple non limitatif et illustré par le dessin annexé, sur lequel :
- la figure 1 est un bloc-diagramme simplifié d'un système de mise en oeuvre du procédé de l'invention, et
- les figures 2 à 4 sont des blocs-diagrammes montrant plusieurs étapes de la mise en oeuvre du procédé conforme à la présente invention à l'aide du système de la figure 1.

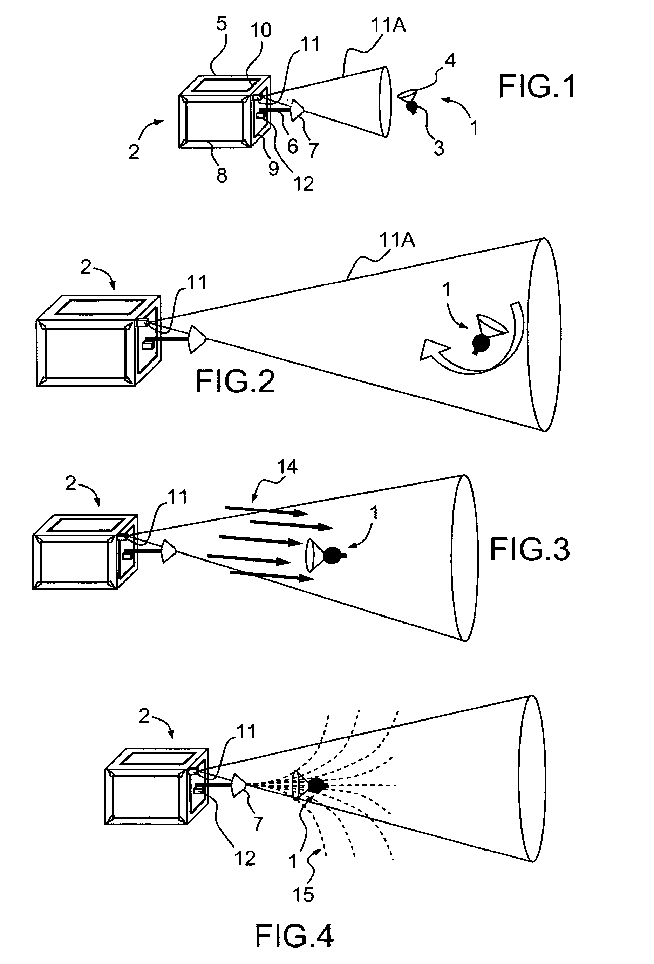

On a schématisé en figure 1 les principaux moyens de mise en oeuvre du procédé de l'invention. Ces moyens ont été représentés au moment où le conteneur 1, ayant précédemment récupéré des échantillons de sol d'une planète (par exemple la planète Mars), a été mis en orbite autour de cette planète et est proche (à quelques dizaines de mètres par exemple) d'une sonde de récupération 2 qui a été précédemment lancée depuis la Terre et mise sur la même orbite que ce conteneur 1. La sonde 2 peut être tout engin spatial approprié (satellite, engin spécifique mis en orbite,...) capable d'accueillir le conteneur 1.

Le conteneur 1, purement passif, comporte essentiellement un corps 3 renfermant notamment les échantillons prélevés, un dispositif permettant d'en déterminer automatiquement l'attitude à distance (non représentés), et le cas échéant des moyens de communication RF et une source d'énergie électrique. Selon un mode de réalisation avantageux de l'invention, ce dispositif de détermination d'attitude est un aimant, de préférence un aimant permanent. Un tel aimant permanent sert à la fois pour la détermination de l'attitude avec le magnétomètre mais aussi pour au contrôle du fait de son interaction avec le champ magnétique généré par la sonde. Sur une des faces du corps 3 est fixé un dispositif 4 d'aide à l'accostage sur la sonde, qui est un cône dans le cas présent. De façon générale, ce dispositif 4 peut être tout système de forme appairée entre sonde et conteneur, cependant, pour simplifier, dans la suite de la description on utilisera le terme de « cône » pour désigner ce dispositif 4. Lorsque ce conteneur est en orbite, il tourne sur lui-même (mouvement dit de « spin ») et a des mouvements désordonnés.

La sonde 2 comporte essentiellement un corps 5 sur lequel est fixé un mât 6 à l'extrémité libre duquel est fixé un cône 7 dont la forme est complémentaire de celle du cône 4, c'est-à-dire que ces deux cônes ont le même angle au sommet Le corps 5, ayant, par exemple, sensiblement une forme de parallélépipède rectangle, comporte sur trois de ses faces respectivement perpendiculaires entre elles des bobines plates 8, 9 et 10 délimitant chacune une surface la plus grande possible, typiquement une surface de 1 m*1 m ou 1m*2m, en fonction des dimensions de la sonde. En variante, on utilise des bobines plus compactes sur un barreau de bonne perméabilité magnétique, délivrant un moment magnétique équivalent. Ces bobines produisent un champ magnétique contrôlé dont la valeur nominale est par exemple d'environ 50 à 100 A.m².Un télescope d'émission/réception 11 d'un Lidar (ou un dispositif de détection similaire, par exemple une caméra ou un capteur HF si le conteneur comporte un émetteur HF) et un magnétomètre 12 sont fixés sur la même face du corps 5 que le cône 7, c'est-à-dire sa face qui doit être orientée vers le conteneur 1, que l'on appellera ici face avant. L'axe optique du télescope 11 est orienté parallèlement au mât 6 et son cône de « visibilité » est référencé 11A. Le magnétomètre 12 est du type pouvant effectuer des mesures d'attitude dans l'espace, selon trois axes perpendiculaires entre eux.

Le corps 5 renferme également un propulseur annexe, par exemple de type chimique (non représenté) permettant de modifier l'attitude et la position de la sonde 2 selon six degrés de liberté (trois degrés en rotation et trois degrés en translation) afin d'orienter correctement sa face avant vers le conteneur 1.

Alors que la figure 1 schématise le conteneur 1 et la sonde 2 à un instant où ils sont un peu trop éloignés l'un de l'autre pour que le magnétomètre 12 puisse le détecter facilement, la figure 2 schématise leurs positions respectives lorsque le conteneur se trouve à une distance de quelques mètres de la sonde (par exemple 3 à 5 mètres). A une telle distance, le conteneur se trouve dans le « cône de vision » 11A du télescope 11 du Lidar, et le magnétomètre peut commencer à capter effectivement le champ créé par l'aimant permanent du conteneur 1, qui est par exemple d'environ 40 A.m². Dans cette situation, dès que le Lidar a détecté la présence du conteneur 1, le magnétomètre 12 est activé et détermine les paramètres de la rotation en spin du conteneur, ou plus exactement la rotation en spin de l'aimant permanent qui est logé dans ce conteneur. Les bobines 8 à 10 sont alors activées selon une séquence déterminée de commande en courant de ces bobines (qui est fonction de la valeur de spin mesurée) afin d'atténuer la valeur de ce spin. La position relative sonde-conteneur est mesurée par le Lidar ou par une caméra et corrigée par des propulseurs (non représentés) montés à bord de la sonde. La matrice d'inertie du conteneur est orientée de façon à aligner son moment magnétique avec un axe d'inertie intermédiaire et avec l'axe de symétrie du dispositif de capture du conteneur, ce qui permet d'atténuer des mouvements selon trois axes avec un couple résistant à deux axes.

Dès que la vitesse de rotation en spin du conteneur a été suffisamment atténuée (typiquement <1 1 degré/seconde), on applique aux bobines 8 à 10 simultanément un courant de polarisation fixe de moment magnétique de contrôle et un moment modulé, comme dans la phase initiale pour amortir les vitesses angulaires. Grâce à cette atténuation, le moment magnétique de l'aimant du conteneur s'aligne avec le champ de polarisation 14 (à la manière de l'aiguille d'une boussole qui s'aligne sur le champ magnétique terrestre, voir figure 3). L'axe du cône 4 est alors pratiquement confondu avec l'axe du cône 7. Le contrôle de position du conteneur est effectué à l'aide de moyens conventionnels (propulsion chimique de la sonde) à faible vitesse de rapprochement.

Lorsque le conteneur arrive à une faible distance de la sonde (par exemple environ 20 cm à 1 mètre, voir figure 4), on commande une bobine spécifique (non représentée) de façon à amorcer un processus d'attraction du conteneur par rapport à la sonde à l'aide d'un autre champ dont les lignes de champ 15 convergent vers la zone de capture de la sonde. Le cône 4 du conteneur vient alors coiffer le cône 7 de la sonde. L'augmentation de la force d'attraction magnétique au fur et à mesure de la diminution de distance entre le conteneur et la sonde est avantageusement maîtrisée par asservissement du courant de ladite bobine spécifique de telle façon qu'elle empêche tout rebond du conteneur sur la sonde.

Dès que le cône 4 du conteneur est en contact avec le cône 7, des moyens, par exemple des moyens mécaniques (non représentés) sont activés de façon à transférer le conteneur à l'intérieur de la sonde.

## Revendications

1. Procédé de capture d'un conteneur d'échantillons de sol planétaire se déplaçant dans l'espace par une sonde se déplaçant également dans l'espace, **caractérisé en ce que** lorsque la sonde (2) est sur l'orbite du conteneur (4), à une distance de quelques mètres du celui-ci et que la face réceptrice (9) de la sonde est orientée vers le conteneur, on génère à bord de la sonde un premier champ magnétique contrôlé pour réduire les vitesses angulaires du conteneur et l'orienter dans une direction privilégiée pour la capture, et lorsque ces vitesses sont devenues négligeables et qu'il est positionné dans la bonne orientation, tout en approchant la sonde du conteneur, on amorce un processus d'attraction du conteneur par rapport à la sonde à l'aide d'un autre champ dont les lignes de champ convergent vers la zone de capture de la sonde.

2. Procédé selon la revendication 1, **caractérisé en ce que** l'on utilise le champ magnétique coté conteneur, servant au contrôle et à l'attraction, pour permettre à la sonde de détecter son attitude à l'aide d'un magnétomètre (12).

3. Procédé selon la revendication 1 ou 2, **caractérisé en ce que** le premier champ a une valeur nominale d'environ 50 à 100 A.m².

4. Procédé selon la revendication 1, 2 ou 3, **caractérisé en ce que** la sonde détecte la proximité du conteneur à l'aide de l'un au moins des capteurs suivants : un Lidar (11), une caméra ou un capteur HF.

5. Procédé selon l'une des revendications précédentes, **caractérisé en ce que** la sonde comporte un propulseur annexe permettant de modifier son attitude selon six degrés de liberté.

6. Procédé selon l'une des revendications précédentes, **caractérisé en ce que** le processus d'attraction du conteneur est amorcé dès que la distance entre le conteneur et la sonde est d'environ 20 cm à 1 mètre.

7. Procédé selon la revendication 6, **caractérisé en ce que** le processus d'attraction comprend une phase d'asservissement du courant des bobines (8 à 10) de telle façon qu'elle empêche tout rebond du conteneur sur la sonde.

8. Procédé selon l'une des revendications précédentes, **caractérisé en ce que**, dès que le conteneur est au contact de la sonde, des moyens sont activés de façon à transférer le conteneur à l'intérieur de la sonde.

## Claims

1. A method for capturing a container of planet-ground samples moving in space by means of a probe that is also moving in space, **characterised in that**, when said probe (2) is in the orbit of said container (4) at a distance of a few metres therefrom, and the receiving face (9) of said probe is oriented towards said container, a first controlled magnetic field is generated on board said probe to reduce the angular speeds of said container and to orient said container in a preferred direction for capture, and, when these speeds have become negligible and it is positioned in the correct orientation, whilst bringing said probe closer to said container, a process of attracting said container to said probe is started using another field with field lines that converge toward the zone of capture of said probe.

2. The method according to claim 1, **characterised in that** the magnetic field on the container side is used, which magnetic field is used to control and attract, so as to allow said probe to detect its attitude using a magnetometer (12).

3. The method according to claim 1 or 2, **characterised in that** the first field has a nominal value of approximately 50 to 100 A.m².

4. The method according to claim 1, 2 or 3, **characterised in that** said probe detects the proximity of said container using at least one of the following sensors: a Lidar (11), a camera or an HF sensor.

5. The method according to any one of the preceding claims, **characterised in that** said probe comprises an additional propulsion unit that allows its attitude to be modified along six degrees of freedom.

6. The method according to any one of the preceding claims, **characterised in that** the process of attracting said container is started as soon as the distance between said container and said probe is between approximately 20 cm and 1 metre.

7. The method according to claim 6, **characterised in that** the attracting process comprises a phase of servo-controlling the current of the coils (8 to 10) in such a way as to prevent any rebound from said container on said probe.

8. The method according to any one of the preceding claims, **characterised in that**, as soon as said container is in contact with said probe, means are activated so as to transfer said container inside said probe.

## Patentansprüche

1. Verfahren zum Erfassen eines sich im Raum bewegenden Containers mit Planetenbodenproben mittels einer Sonde, die sich ebenfalls im Raum bewegt, **dadurch gekennzeichnet, dass**, wenn sich die Sonde (2) im Orbit des Containers (4) in einem Abstand von ein paar Metern davon befindet und die Empfangsfläche (9) der Sonde in Richtung des Containers orientiert ist, ein erstes geregeltes Magnetfeld an Bord der Sonde erzeugt wird, um die Winkelgeschwindigkeiten des Containers zu reduzieren und den Container in einer bevorzugten Richtung zur Erfassung zu orientieren, und wenn diese Geschwindigkeiten vernachlässigbar geworden sind und er in der korrekten Orientierung ist, während die Sonde näher an den Container herangebracht wird, ein Vorgang des Anziehens des Containers an die Sonde mit einem anderen Feld mit Feldlinien eingeleitet wird, die zur Erfassungszone der Sonde hin konvergieren.

2. Verfahren nach Anspruch 1, **dadurch gekennzeichnet, dass** das Magnetfeld auf der Containerseite benutzt wird, die zum Steuern und Anziehen verwendet wird, damit die Sonde ihre Lage mit einem Magnetometer (12) erfassen kann.

3. Verfahren nach Anspruch 1 oder 2, **dadurch gekennzeichnet, dass** das erste Feld einen Nennwert von etwa 50 bis 100 A.m² hat.

4. Verfahren nach Anspruch 1, 2 oder 3, **dadurch gekennzeichnet, dass** die Sonde die Nähe des Containers mit Hilfe von wenigstens einem der folgenden Sensoren erfasst: einem Lidar (11), einer Kamera oder einem HF-Sensor.

5. Verfahren nach einem der vorherigen Ansprüche, **dadurch gekennzeichnet, dass** die Sonde ein Nebentriebwerk umfasst, mit dem ihre Lage mit sechs Freiheitsgraden verändert werden kann.

6. Verfahren nach einem der vorherigen Ansprüche, **dadurch gekennzeichnet, dass** der Vorgang des Anziehens des Containers eingeleitet wird, sobald der Abstand zwischen dem Container und der Sonde etwa 20 cm bis 1 Meter beträgt.

7. Verfahren nach Anspruch 6, **dadurch gekennzeichnet, dass** der Anziehvorgang eine Phase der Servoregelung des Stroms der Spulen (8 bis 10) beinhaltet, so dass jegliches Zurückprallen des Containers auf der Sonde verhindert wird.

8. Verfahren nach einem der vorherigen Ansprüche, **dadurch gekennzeichnet, dass**, sobald der Container mit der Sonde in Kontakt ist, Mittel aktiviert werden, um den Container in die Sonde zu übertragen.
